# EUROPEAN PATENT APPLICATION

(11) **EP 1 582 973 A1**
(43) Date of publication of application: **05.10.2005**
(21) Application number: 05251880.0
(22) Date of filing: 24.03.2005
(51) Int. Cl.: G06F 3/14

(54) **Display device, display support program and display support method**

(30) Priority: 25.03.2004 JP 2004090581
(71) Applicant: Pioneer Corporation, Tokyo (JP)
(72) Inventor: Soto, Yoshifumi c/o Pioneer Plasma Display Corpora, Kagoshima Prefecture 899-0294 (JP)
(74) Representative: Maury, Richard Philip

(57) **Abstract**

A display system includes N display devices that are connected in order from the first display device to the Nth (N is an integer of 2 or more) display device. Each display device includes a storage portion for holding its own display specification information, a memory portion, and a data processing portion. The data processing portion of the Nth display device reads the Nth display device's display specification information from the storage portion of the Nth display device and stores this display specification information in the memory portion of the Nth display device as Nth optimum display specification information. The data processing portion of the Jth display device (1≤J≤N-1) reads the Jth display device's display specification information from the storage portion of the Jth display device, reads (J+1)th optimum display specification information from the memory portion of the (J+1)th display device, generates Jth optimum display specification information that is common to the Jth display device's display specification information and the (J+1)th optimum display specification information, and stores the Jth optimum display specification information in the memory portion of the Jth display device. The first optimum display specification information that is stored in the memory portion of the first display device is referenced by a picture distribution device and a common picture signal that is displayed by each of N display devices is transmitted to the first display device from the picture distribution device.

## Description

The present invention relates to a method, program and apparatus used when a picture signal supplied from a picture distribution device is displayed by a plurality of display devices.

Some of recent display devices include a digital interface and process a digital signal to display an image. Such display devices are sometimes used with PCs (personal computers) and CE devices (consumer electronic devices). Here, a CE device is a device that outputs a digital picture signal to a display device. Examples of CE devices include an STB (digital broadcast set-top box) and a DVD player.

A display device that includes a digital interface sometimes transmits display specification information to a picture distribution device. An example of display specification information is EDID (Extended Display Identification Data). EDID includes the resolution of the display device, information on the scanning signal, the frame rate, the manufacturer identifier, and the identifier of the display device. The picture distribution device references the EDID and generates a digital signal in a format that conforms with the specifications of the display device. This function is known as the so-called 'plug-and-play' function.

A picture signal supplied from a picture distribution device is often used in a plurality of display devices to display images in these display devices respectively. In this case, typically a divider is employed to divide a picture signal. The divider is connected between the picture distribution device and a plurality of display devices so that it receives a signal from the picture distribution device and distributes the signal to the display devices.

A picture signal which conforms to the specifications of the display devices concerned is prepared by the picture distribution device. Thus, most picture distribution devices execute processing to output a picture signal after reading display specification information supplied from the display devices.

In order to allow the picture distribution device to output an appropriate picture signal, the divider is provided with a function to relay the display specif ication information supplied from the display devices. The divider generates a picture signal on the basis of the relayed display specification information. This technology is disclosed in Japanese Patent No. 3408781, for example.

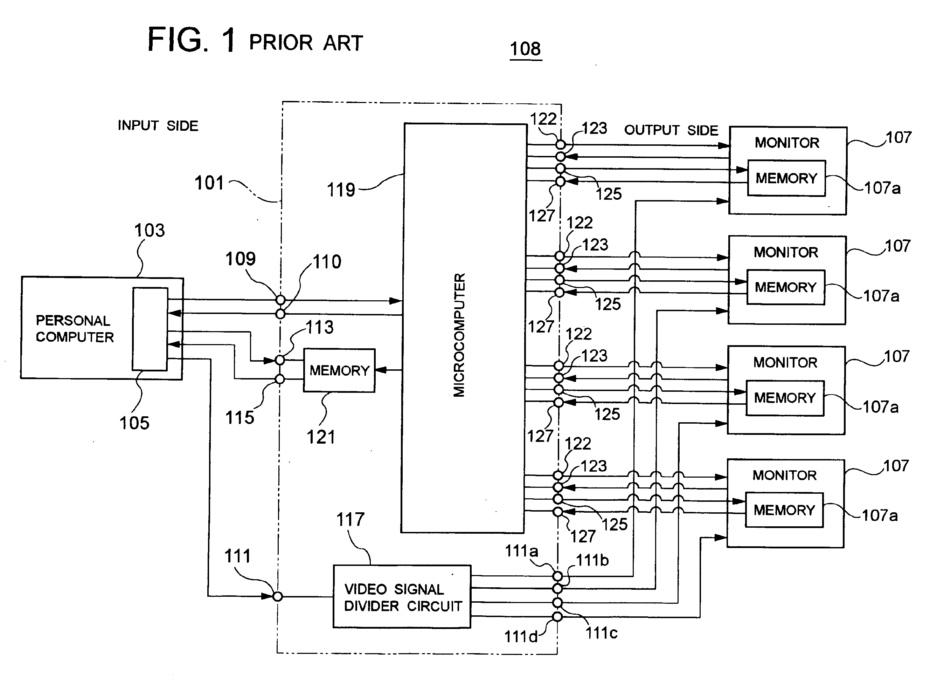

Fig. 1 of the accompanying drawings shows a block diagram of a conventional display system 108 which is disclosed in Japanese Patent No. 3408781. The conventional display system 108 includes a personal computer 103, which is a picture distribution device, a video signal divider 101, which is a divider, and a plurality of monitors 107, which are display devices. A graphics card 105 is installed in the personal computer 103. The video signal divider 101 divides a video signal which is a picture signal from the graphics card 105.

The video signal divider 101 includes an input-side supply terminal 109, an input-side video signal terminal 111, a pluralityof output-sidevideo signal terminals 111a, 111b, 111c, and 111d, and a plurality of output-side supply terminals 122. The video signal divider 101 further includes a video signal divider circuit 117 and a microcomputer 119.

The personal computer 103 supplies power to the microcomputer 119 via the input-side supply terminal 109 by means of the graphics card 105. The microcomputer 119 supplies power to the monitors 107 via the respective output-side supply terminals 122.

The personal computer 103 outputs a video signal that includes an RGB video signal to the video signal divider circuit 117 via the video signal terminal 111 by means of the graphics card 105. The video signal divider circuit 117 divides the video signal from the video signal terminal 111 and supplies the result to the monitors 107 via the respective video signal terminals 111a, 111b, 111c and 111d.

The video signal divider 101 also includes an input-side HPD (Hot Plug Detect) terminal 110, a DDC data terminal 115, and a plurality of output-side HPD terminals 123.

The microcomputer 119 generates detection results by detecting the existence of the monitors 107 via the respective HPD terminals 123. The microcomputer 119 issues the detection results to the graphics card 105 via the HPD terminal 110.

The video signal divider 101 further includes a DDC (Display Data Channel) clock terminal 113 that is provided on the input side, a plurality of DDC clock terminals 125 provided on the output side, and a plurality of DDC data terminals 127. The video signal divider 101 also includes a memory 121. Each of the monitors 107 includes a memory 7a where EDID is stored.

The microcomputer 119 accesses the memories 7a of the monitors 107 via the DDC clock terminals 125 and reads EDID from the memories 7a of the monitors 107 via the DDC data terminals 127. The microcomputer 119 extracts EDID that is common to all the monitors 107 and writes the EDID to the memory 121 as common EDID. The common EDID that is written to the memory 121 can be referenced by means of the graphics card 105 of the personal computer 103. In this case, the personal computer 103 sends a serial clock signal to the memory 121 via the DDC clock terminal 113 from the graphics card 105. The memory 121 outputs the common EDID via the DDC data terminal 115 in sync with the serial clock signal. As a result, the personal computer 103 is able to output a common picture signal by referencing the common EDID to all the connected monitors 107 from the graphics card 105.

In this conventional display system 108, the video signal divider 101 is connected to each of the monitors 107 via the associated video signal terminal 111a, 111b, 111c or 111d, output-side supply terminal 122, HPD terminal 123, DDC clock terminal 125 and DDC data terminal 127. In order for the video signal divider 101 to obtain EDID from each monitor 107, the video signal divider 101 requires the HPD terminal 123, DDC clock terminal 125 and DDC data terminal 127 that wire the video signal divider 101 to monitor 107. The greater the number of monitors 107 that are connected to the video signal divider 101, the greater the number of terminals connecting to the monitors 107. That is, there is a large number of wires needed to electrically couple many monitors 107 to the video signal dividers 101, and the cost of wiring increases.

Thus, in the conventional display system 108, the terminal groups (each group includes a video signal terminal 111, output-side supply terminal 122, HPD terminal 123, DDC clock terminal 125, and DDC data terminal 127) must be provided on the output side of the video signal divider 101 in the same quantity as there are monitors 107 connected to the video signal divider 101. That is, when it is necessary to connect N (N is an integer of 2 or more) monitors 107 to the video signal divider 101, N terminal groups must be provided on the output side of the video signal divider 101. For this reason, the mount area of the video signal divider 101 must be widened and enlarged. As a result, the conventional arrangement 108 has little versatility and suffers from a high wiring cost.

Further, in the conventional display system 108, the number of monitors 107 that can be provided on the output side of the video signal divider 101 is sometimes determined by regulations regarding the mount area of the video signal divider 101. When this number is M (M is an integer of 1 or more), and M is less than N, then the N monitors 107 cannot all be connected to the video signal divider 101. As a result, there is no versatility.

One obj ect of the present invention is to provide a versatile technology that makes it possible to output a common picture signal to be displayed by each of the connected display devices.

According to an embodiment of the present invention, there is provided a display system that includes N display devices connected in series from the first display device to the Nth (N is an integer of 2 or more) display device. Each of the N display devices includes a storage portion for holding its own display specification information that is suited for itself. Each display device also includes a memory portion and a data processing portion.

The data processing portion of the Nth display device reads the Nth display device's display specification information from the storage portion of the Nth display device and stores the Nth display device's display specification information in the memory portion of the Nth display device as Nth optimum display specification information.

The data processing portion of the Jth display device (1≤J≤N-1) reads the Jth display device's display specification information from the storage portion of the Jth display device, reads (J+1)th optimum display specification information from the memory portion of the (J+1) th display device, and generates Jth optimum display specification information that is common to the Jth display device's display specification information and the (J+1) th optimum display specification information. The Jth optimum display specification information is stored in the memory portion of the Jth display device.

The display system of the present invention may further include a picture distribution device that is connected to the first display device. The picture distribution device preferably references first optimum display specification information that is stored in the memory portion of the first display device and transmits, to the first display device, a first picture signal which is a common picture signal to be displayed by each of the Nth display devices.

Preferably, the display specification information of each display device is EDID (Extended Display Identification Data) of the display device concerned. The EDID preferably includes at least one of the resolution, the horizontal frequency, the vertical frequency, and the pixel clock frequency of the display device concerned.

Each display device may further include a picture signal processing portion and a display. The picture signal processing portion of the Jth display device preferably receives a Jth picture signal and displays same on the display of the Jth display device. This picture signal processing portion also transmits the Jth picture signal to the (J+1) th display device as a (J+1) th picture signal.

The picture signal processing portion of the Nth display device preferably receives an Nth picture signal and displays same on the display of the Nth display device.

According to another embodiment of the present invention, there is provided a display device in a display system. The display system includes a plurality of display devices connected in series from the first display device to the Nth (N is an integer of 2 or more) display device. Each display device includes a storage portion for holding its own display specification information that is suited for itself. Each display device also includes a memory portion and a data processing portion. A picture distribution device is connected to the first display device.

If the data processing portion of the display device identifies the fact that the display device itself is the Nth display device, the data processing portion of the Nth display device reads its own display specification information (i.e., Nth display device's display specification information) from the storage portion of the Nth display device and stores this display specification information in the memory portion of the Nth display device as the Nth optimum display specification information.

If the data processing portion of the display device identifies the fact that the display device itself is the Jth display device (1≤J≤N-1), then the data processing portion reads the Jth display device' s display specification information from the storage portion of the Jth display device, reads the (J+1) th optimum display specification information from the memory portion of the (J+1) th display device, and generates Jth optimum display specification information that is common to the Jth display device's display specification information and the (J+1)th optimum display specification information. The Jth optimum display specification information is stored in the memory portion of the Jth display device.

If the data processing portion of the display device identifies the fact that the display device is the first display device, the data processing portion of the first display device sends a storage completion notification to the picture distribution device. In response to this notification, the picture distribution device references the first optimumdisplay specification information that is stored in the memory portion of the first display device, and issues a first picture signal, which is a common picture signal to be displayed by each of the N display devices.

The display specification information of each display device is preferably EDID of the display device concerned. The EDID preferably includes at least one of the resolution, the horizontal frequency, the vertical frequency, and the pixel clock frequency of that display device.

The display device may further include a picture signal processing portion and a display.

When the display device is the Jth display device, the picture signal processing portion of the Jth display device may receive a Jth picture signal, display same on the display of the Jth displaydevice, and transmit the Jthpicture signal to the (J+1)th display device as the (J+1)th picture signal.

When the display device is the Nth display device, the picture signal processing portion of the Nth display device may receive the Nth picture signal and display same on the display of the Nth display device.

According to still another embodiment of the present invention, there is provided a display support program which supports displaying of a picture signal. The display support program is a computer program that is applied to each of the N display devices connected in series from the first to Nth (N is an integer of 2 or more). Each display device includes a computer that has a storage portion for holding its own display specification information suited for itself. The computer also has a memory portion. A picture distribution device is connected to the first display device.

The display support program causes the computer of the display device to execute the steps of, when it is identified that the display device itself is the Nth display device, reading Nth display device's display specification information from the storage portion of the Nth display device and storing this information in the memory portion of the Nth display device as Nth optimum display specification information.

The display support program also causes the computer of the display device to execute the steps of, when it is identified that the display device is the Jth display device (1≤J≤ N-1), reading Jth display device's display specification information from the storage portion of the Jth display device, reading (J+1)th optimum display specification information from the memory portion of the (J+1)th display device, generating Jth optimum display specification information that is common to the Jth display device's display specification information and the (J+1) th optimum display specification information, and storing the Jth optimum display specification information in the memory portion of the Jth display device.

The display support program may also cause the computer of the display device to execute the step of, when it is identified that the display device is the first display device, sending a storage completion notification to the picture distribution device. In response to this notification, the picture distribution device references first optimum display specification information that is stored in the memory portion of the first display device, and transmits a first picture signal which is a common picture signal to be displayed by each of the N display devices.

The display specification information of each display device is preferably EDID of the display device concerned. The EDID preferably includes at least one of the resolution, the horizontal frequency, the vertical frequency, and the pixel clock frequency of the display device concerned.

The display support program may also cause the computer to execute the steps of, when the display device is the Jth display device, receiving and displaying a Jth picture signal and transmitting the Jth picture signal to the (J+1) th display device as a (J+1)th picture signal. When the display device is the Nth display device, the display support program may cause the computer to execute the steps of receiving and displaying an Nth picture signal.

According to yet another embodiment of the present invention, there is provided a display support method which supports displaying of a picture signal. The display support method is applied to each of N display devices that are connected in series from the first to Nth (N is an integer of 2 or more) display device.

The display support method includes the steps of, when it is identified that the display device in question is the Nth display device, reading Nth display device's display specification information from the storage portion of the Nth display device, and storing this information in the memory portion of the Nth display device as Nth optimum display specification information.

The display support method further includes the steps of, when it is identified that the display device is the Jth display device (1≤J≤ N-1), reading Jth display device's display specification information from the storage portion of the Jth display device, reading (J+1)th optimum display specification information from the memory portion of the (J+1) th display device, generating Jth optimum display specification information that is common to the Jth display device's display specification information and the (J+1)th optimum display specification information, and storing the Jth optimum display specification information in the memory portion of the Jth display device.

The display support method may further include the step of, when it is identified that the display device is the first display device, outputting a storage completion notification to the picture distribution device so that the picture distribution device references first optimum display specification information that is stored in the memory portion of the first display device, and transmits a first picture signal which is a common picture signal to be displayed by each of the N display devices.

The display specification information of each display device is preferably EDID of the display device concerned. The EDID preferably includes at least one of the resolution, the horizontal frequency, the vertical frequency, and the pixel clock frequency of that display device.

The display support method may further include the step of, when the display device is the Jth display device, receiving and displaying a Jth picture signal and transmitting the Jth picture signal to the (J+1) th display device as a (J+1) th picture signal. The display support method may further include the step of, when the display device is the Nth display device, receiving and displaying the Nth picture signal.

Because the present invention makes it possible to serially connect a plurality of display devices from the first display device to the final display device, the connected display devices can be increased by any amount. Thus, superior versatility is afforded. It is also possible to output a common picture signal that is displayed by each of the connected display devices by using the first optimum display specification information. This also provides great versatility.

These and other objects, aspects and advantages of the present invention will become apparent to those skilled in the art from the following detailed description and appended claims when read and understood in conjunction with the accompanying drawings.
Fig. 1 is a block diagram showing the constitution of a conventional display system;
Fig. 2 is a block diagram showing the constitution of the display system according to an embodiment of the present invention;
Fig. 3 is a flowchart showing the operation of the display system shown in Fig. 2;
Fig. 4A is a frequency information table that is stored in an EDID storage EEPROM of a first display device and shows frequency-related display specification information of the first display device;
Fig. 4B is a frequency information table that is stored in an EDID storage EEPROM of a second display device and shows frequency-related display specification information of the second display device;
Fig. 5 is a table that is generated by an EDID data processing portion of the first display device and shows optimum display specification information;
Fig. 6A is a resolution information table that is stored in the EDID storage EEPROM of the first display device and shows display specification information that associates the resolution of the first display device and the priority thereof;
Fig. 6B is a resolution information table that is stored in the EDID storage EEPROM of the second display device and shows display specification information that associates the resolution of the second display device and the priority thereof; and
Fig. 7 is another table that is generated by the EDID data processing portion of the first display device and shows optimum display specification information.

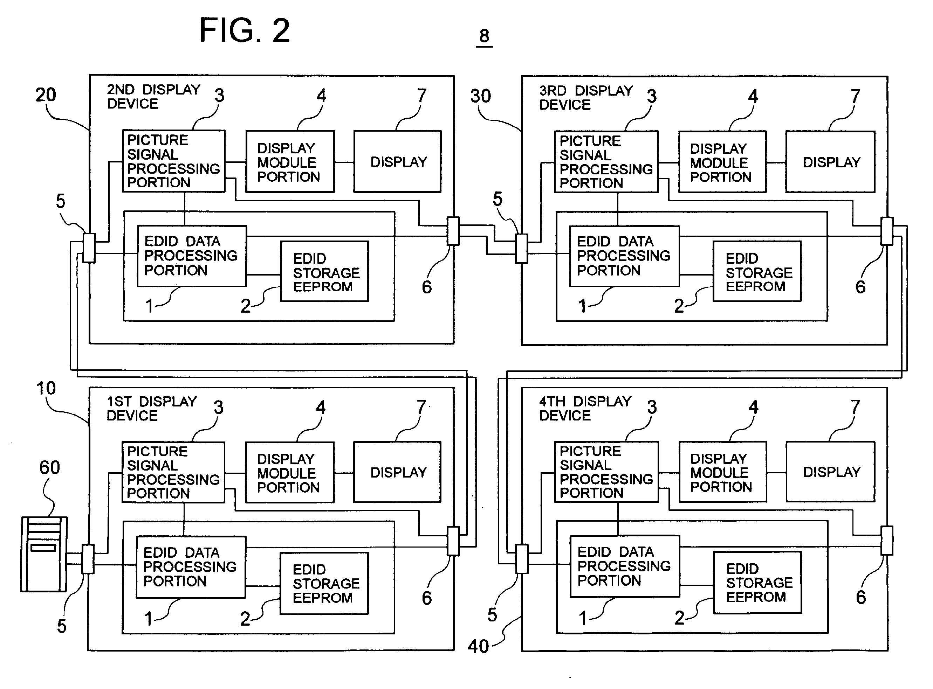

An embodiment of a display system of the present invention will be described in detail below with reference to Fig. 2 to Fig. 7 of the accompanying drawings.

Referring to Fig. 2, a structure of the display system 8 of this embodiment will be described. The display system 8 includes a picture distribution device 60 and a plurality of display devices 10 to 40. The display devices 10 to 40 will be referred to below as the 'first display device 10', 'second display device 20', 'third display device 30' and 'fourth display device 40'. There are four display devices shown in Fig. 2 but the number of display devices in this embodiment is not limited to four.

Each of the display devices 10 to 40 includes a picture signal input terminal 5 and a picture signal output terminal 6. The picture distribution device 60, first display device 10, second display device 20, third display device 30, and fourth display device 40 are serially connected in this order. That is, the picture distribution device 60 is connected to the picture signal input terminal 5 of the first display device 10. The picture signal output terminal 6 of the first display device 10 is connected to the picture signal input terminal 5 of the second display device 20. The picture signal output terminal 6 of the second display device 20 is connected to the picture signal input terminal 5 of the third display device 30. The picture signal output terminal 6 of the third display device 30 is connected to the picture signal input terminal 5 of the fourth display device 40.

The picture distribution device 60 is an information processing terminal, such as a personal computer, and generates a picture signal that is to be displayed by the display devices 10 to 40. First, the picture distribution device 60 receives display specification information of the display devices 10 to 40. How each of the display devices 10 to 40 transmits its own display specification information to the picture distribution device 60 will be described later. The display specification information includes EDID (Extended Display Identification Data). The EDID includes at least one of the resolution, the horizontal frequency, the vertical frequency, the pixel clock frequency, information on the scanning signal, the frame rate, the manufacturer identifier, and the identifier of the display device. The picture distribution device 60 references the EDID and outputs a digital signal in a format conforming to the specifications of the display devices 10 to 40.

Although a case where a picture signal transmitted by the picture distribution device 60 is a digital signal is described here, this does not limit the format of the picture signal which can be used in the present invention. When the signal supplied by the picture distribution device 60 is an analog signal, the display devices 10 to 40 execute data processing that conforms to the analog signal.

Each of the display devices 10 to 40 also includes a computer and a display 7. The computer includes an EDID data processing portion 1, an EDID storage EEPROM 2, a picture signal processing portion 3, a display module portion 4, and a CPU (not shown). The EDID data processing portion 1 and picture signal processing portion 3 are computer programs that support the display of the picture signal and the CPU executes this computer program. The EDID data processing portion 1 has a storage area. The picture signal processing portion 3 includes a picture signal receiver portion (not shown) and a picture signal transmitter portion (not shown). The EDID storage EEPROM 2 of each display device 10, 20, 30, 40 stores its own display specification information that is employed in that display device.

The constitutions of the display devices 10 to 40 are the same and therefore the first display device 10 will only be described below.

The first display device 10 receives a digital signal, that is generated by the picture distribution device 60, at the picture signal input terminal 5 of the first display device 10. The digital signal carries encoded display information. The picture signal processing portion 3 of the first display device 10 performs decoding in response to the digital signal that is supplied via the picture signal input terminal 5 of the first display device 10. This decoding is performed by means of a picture signal receiver provided in the picture signal processing portion 3.

The picture signal processing portion 3 of the first display device 10 also performs signal processing, such as image quality enhancement processing and picture resolution conversion processing, on the decoded picture signal so that a proper image is displayed on the display 7 of the first display device 10. A picture signal that has undergone signal processing is then supplied to the display module portion 4 in the first display device 10. Further, the picture signal processing portion 3 of the first display device 10 performs encoding on the picture signal by means of an internal picture signal transmitter portion in order to transmit the picture signal to the second display device 20. The second display device 20 is a next-stage display device, which is provided downstream of the first display device 10 when viewed from the picture distribution device 60. The encoded picture signal is transmitted to the display device 20 at the next stage from the picture signal output terminal 6 of the first display device 10.

The digital picture signal that is generated by the picture signal processing portion 3 in the first display device 10 is introduced to the display module portion 4 of the first display device 10. The display module portion 4 converts the digital picture signal to an appropriate signal to match the display 7 that actually displays the signal as a picture, and supplies the resulting signal to the display 7. The display 7 thus displays the picture that is transmitted from the picture distribution device 60.

The EDID data processing portion 1 of the first display device 10 reads the display specification information that is stored in the EDID storage EEPROM 2 of the first display device 10 and also reads display specification information that is saved in the EDID data processing portion 1 of another display device (second display device 20) that is connected to the picture signal output terminal 6 of the first display device 10. The EDID data processing portion 1 generates (or selects) optimum display specification information that is common to the two display specification information, and stores the optimum display specification information in a predetermined storage area within the EDID data processing portion 1. The optimum display specification information thus stored is display specification information that is used to display an image simultaneously in the two display devices 10 and 20. This optimum display specification information is read by the picture distribution device 60 (or the display device that is connected to the picture input terminal).

The operation of the display system 8 will be described next.

In the following description, the first display device 10 is identified as the display device that is connected first to the picture distribution device 60 (first-stage display device); the second display device 20 is identified as the display device that is connected second to the picture distribution device 60 (second-stage display device); the third display device 30 is identified as the display device that is connected third to the picture distribution device 60 (third- stage display device); and the fourth display device 40 is identified as the display device that is connected fourth to the picture distribution device 60 (fourth-stage display device). A case where a total of four display devices are identified as being in a connected state is described in this embodiment.

It should be noted that the connection state of each display device may be recognized by means of an operation (an operation that detects the connection status by a remote control terminal or the like) that uses a control device provided in a display device.

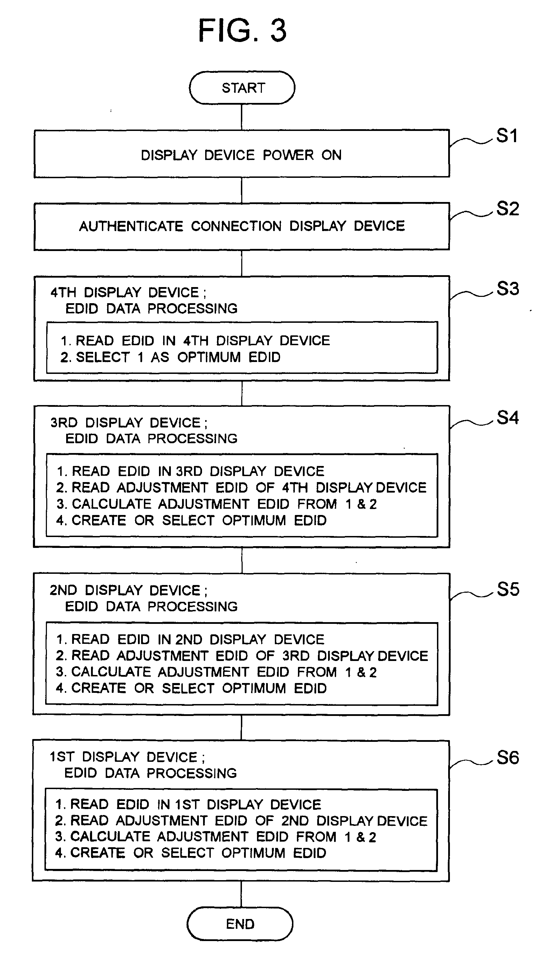

Fig. 3 is a flowchart that shows the operation of the display system 8. The operation of the display system 8 starts when the display devices 10 to 40 are started up (step S1). Each of the display devices 10 to 40 performs a monitoring operation to monitor the connected states between these display devices in response to the powering up of the power supplies of the display devices 10 to 40 (step S2). In step S2, each of the display devices identifies or recognizes, by means of this monitoring operation, the connection stage thereof with respect to the picture distribution device 60.

The EDID data processing portion 1 of the fourth display device 40 identifies the fact that the fourth display device 40 is a display device that is located at the very end when viewed from the picture distribution device 60, and executes an operation to read the display specification information (step S3). In step S3, the EDID data processing portion 1 of the fourth display device 40 reads the display specification information of the fourth display device 40 that is stored in the EDID storage EEPROM 2 of the fourth display device 40. The EDID data processing portion 1 of the fourth display device 40 stores the display specification information of the fourth display device 40 thus read as optimum display specification information in a predetermined memory area that can be read by the third display device 30 among the memory areas in the EDID data processing portion 1. The EDID data processing portion 1 of the fourth display device 40 issues a storage completion notification to the third display device 30 when the display specification information of the fourth display device 40 is stored.

The CPU of the third display device 30 receives the storage completion notification from the fourth display device 40 (step S4). In step 4, the CPU of the third display device 30 causes the EDID data processing portion 1 of the third display device 30 to read the display specification information of the third display device 30 in response to the storage completion notification. In response to this command, the EDID data processing portion 1 of the third display device 30 reads the display specification information of the third display device 30 that is stored in the EDID storage EEPROM 2 of the third display device 30. Then, the EDID data processing portion 1 of the third display device 30 accesses the fourth display device 40 and reads the optimum display specification information of the fourth display device 40 that is stored in the predetermined memory area of the EDID data processing portion 1 of the fourth display device 40.

In step 4, upon reading the display specification information of the fourth display device 40, the EDID data processing portion 1 of the third display device 30 generates (selects) optimum display specification information that is common to the display specification information of the third display device 30 and the display specification information of the fourth display device 40 and stores the optimum display specification information in a predetermined memory area that can be read by the second display device 20 among memory areas within the EDID data processing portion 1 of the third display device 30. The stored optimum display specification information is display specification information that is used to display images simultaneously on the two display devices 30 and 40. Upon storing the optimum display specification information, the EDID data processing portion 1 of the third display device 30 sends the storage completion notification to the second display device 20.

The CPU of the second display device 20 receives the storage completion notification from the third display device 30 (step S5). In step 5, the CPU of the second display device 20 causes the EDID data processing portion 1 of the second display device 20 to read the display specification information of the second display device 20 in response to the storage completion notification. In response to this command, the EDID data processing portion 1 of the second display device 20 reads the display specification information of the second display device 20 that is stored in the EDID storage EEPROM 2 of the second display device 20. Then, the EDID data processing portion 1 of the second display device 20 accesses the third display device 30 and reads the optimum display specification information of the display devices 30 and 40 that is stored in the predetermined storage area of the EDID data processing portion 1 of the third display device 30.

In step 5, upon reading the optimum display specification information of the display devices 30 and 40, the EDID data processing portion 1 of the second display device 20 generates (selects) optimum display specification information that is common to the display specification information of the second display device 20 and the display specification information of the display devices 30 and 40 and stores the optimum display specification information in a predetermined storage area that can be read by the first display device 10 among storage areas within the EDID data processing portion 1 of the second display device 20. The stored optimum display specification information is display specification information that is used to display images simultaneously on the three display devices 20, 30, and 40. Upon storing the optimum display specification information, the EDID data processing portion 1 of the second display device 20 sends the storage completion notification to the first display device 10.

The CPU of the first display device 10 receives the storage completion notification from the second display device 20 (step S6). In step 6, the CPU of the first display device 10 causes the EDID data processing portion 1 of the first display device 10 to read the display specification information of the first display device 10 in response to the storage completion notification. In response to this command, the EDID data processing portion 1 of the first display device 10 reads the display specification information of the first display device 10 that is stored in the EDID storage EEPROM 2 of the first display device 10. The EDID data processing portion 1 of the first display device 10 accesses the second display device 2 0 and reads the optimum display specification information of the display devices 20, 30 and 40 that is stored in the predetermined storage area of the EDID data processing portion 1 of the second display device 20.

In step 6, upon reading the common display specification information of the display devices 20, 30 and 40, the EDID data processing portion 1 of the first display device 10 generates (selects) optimum display specification information that is common to the display specification information of the first display device 10 and the display specification information of the second, third and fourth display devices 20, 30 and 40 and stores the optimum display specification information in a predetermined storage area that can be read by the picture distribution device 60 among storage areas within the EDID data processing portion 1 of the first display device 10. The stored optimum display specification information is display specification information that is used to display images simultaneously on the four display devices 10, 20, 30, and 40. Upon storing the optimum display specification information, the EDID data processing portion 1 of the first display device 10 sends the storage completion notification to the picture distribution device 60. The picture distribution device 60 receives the storage completion notification and reads the optimum display specification information from the predetermined storage area within the EDID data processing portion 1 of the first display device 10. The picture distribution device 60 references the optimum display specification information thus read and transmits a common picture signal, that is displayed by each of the display devices 10, 20, 30, and 40, to the first display device 10.

In the display system 8, therefore, upon identifying that the display device itself is the Nth-stage (N is an integer of 2 or more) display device, the EDID data processing portion 1 of the Nth-stage display device 40 reads the Nth display specification information from the EDID storage EEPROM 2 of the Nth-stage display device 40 and stores this information in the storage area of the EDID data processing portion 1 of the Nth-stage display device 40 as Nth optimum display specification information.

Upon identifying that the display device itself is the Jth-stage display device, the EDID data processing portion 1 of the Jth-stage display device (1≤J≤N-1) reads Jth-stage display specification information (i.e., Jth display device's displya specification information) from the EDID storage EEPROM 2 of the Jth-stage display device and reads (J+1) th optimum display specification information from a storage area of the EDID data processing portion 1 of the (J+1)th-stage display device. Thereafter, the EDID data processing portion 1 of the Jth-stage display device generates (or selects) Jth optimum display specification information that is common to the Jth display specification information and the (J+1)th optimum display specification information and stores the Jth optimum display specification information in a storage area of the EDID data processing portion 1 of the Jth-stage display device.

Upon identifying that the display device itself is the first-stage display device, the EDID data processing portion 1 of the first display device (i.e., first-stage display device) 10 sends a storage completion notification to the picture distribution device 60 after first optimum display specification information is stored in the storage area of the EDID data processing portion 1 of the first display device 10. Accordingly, the picture distribution device 60 receives the storage completion notification and reads the first optimum display specification information from the storage area of the EDID data processing portion 1 of the first display device 10. Thereupon, the picture distribution device 60 is able to reference the first optimum display specification information and generate a common picture signal, that can be displayed simultaneously on each of the N display devices 10, 20, 30, and 40. The picture distribution device 60 send this common picture signal to the first display device 10.

In this embodiment, the picture distribution device 60 outputs the picture signal to the first display device 10 as a first picture signal. Thereupon, the picture signal processing portion 3 of the Jth display device (1≤J≤N-1) receives the Jth picture signal and displays same on the display 7 of the Jth display device and then transmits the Jth picture signal to the (J+1) th display device as a (J+1) th picture signal. The picture signal processing portion 3 of the Nth display device receives the Nth picture signal and displays same on the display 7 of the Nth display device.

According to the display system 8, because the display devices can be serially connected in order from the first display device to the Nth (N is an integer of 2 or more) display device, the connected display devices can be increased by any amount and superior versatility is afforded.

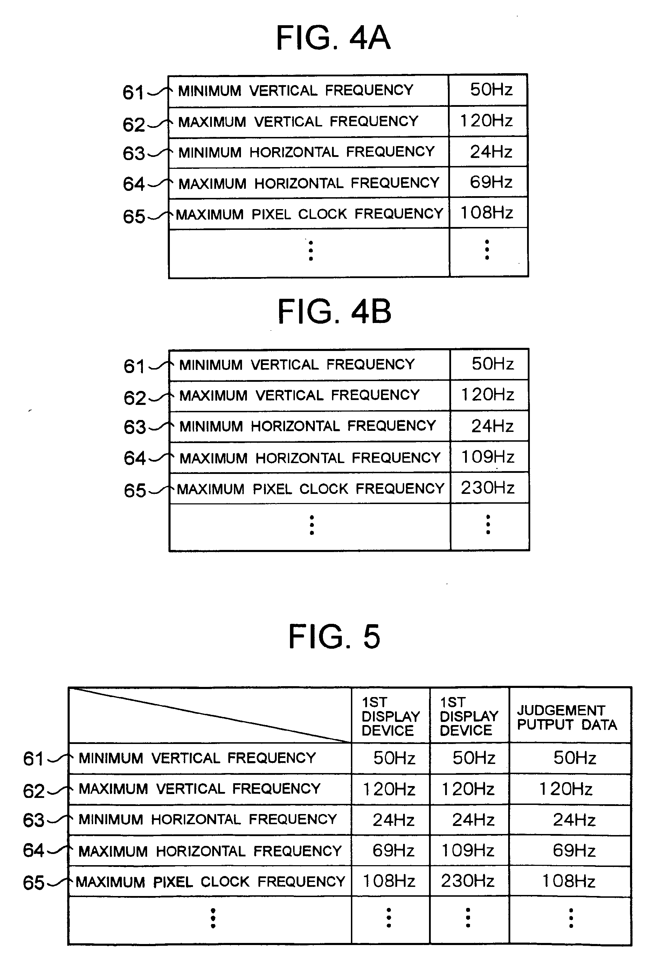

The operation of the display system of the present invention will be described further in specific terms hereinbelow by using another embodiment with reference to Fig. 4A, Fig. 4B and Fig. 5. The following embodiment deals with a case where there are two display devices 10 and 20 in the display system, and the first display device 10 generates optimum display specification information relating to frequency and supplies it to the first display device 10 and second display device 20. Similar reference numerals are used to designate similar parts and signals in this and preceding embodiments.

Fig. 4A is a frequency information table that is stored in the EDID storage EEPROM 2 of the first display device 10 and shows display specification information relating to various frequencies of the first display device 10. Fig. 4B is a frequency information table that is stored in the EDID storage EEPROM 2 of the second display device 20 and shows display specification information relating to various frequencies of the second display device 20.

Referring to Fig. 4A, the minimum vertical frequency 61 of the first display device 10 is "50 Hz" and the maximum vertical frequency 62 is "120 Hz". The minimum horizontal frequency 63 of the first display device 10 is "24 Hz" and the maximum horizontal frequency 64 is "69 Hz". It is also shown that the maximum pixel clock frequency 65 of the first display device 10 is "108 Hz". Referring to Fig. 4B, the minimum vertical frequency 61 of the second display device 20 is "50 Hz" and the maximum vertical frequency 62 is "120 Hz". The minimum horizontal frequency 63 of the second display device 20 is "24 Hz" and the maximum horizontal frequency 64 is "109 Hz". It is also shown that the maximum pixel clock frequency 65 of the second display device 20 is "230 Hz".

Fig. 5 is a table that is generated by an EDID data processing portion 1 of the first display device 10 and shows optimum display specification information. First, the EDID data processing portion 1 of the first display device 10 creates a table that associates the frequency-related display specification information (Fig. 4A) that is stored in the EDID storage EEPROM 2 of the first display device 10, the frequency-related display specification information (Fig. 4B) that is stored in the predetermined storage area of the EDID data processing portion 1 of the second display device 20 and judgment output data that is optimum display specification information.

The judgment output data is optimum data (optimum display specification information) for the first display device 10 and second display device 20 and includes the minimum vertical frequency 61, the maximum vertical frequency 62, the minimum horizontal frequency 63, the maximum horizontal frequency 64, and the maximum pixel clock frequency 65. The EDID data processing portion 1 of the first display device 10 references the table and selects "50 Hz", "120 Hz", and "24 Hz" for the minimum vertical frequency 61, the maximum vertical frequency 62, and the minimum horizontal frequency 63 respectively as the judgment output data. The EDID data processing portion 1 of the first display device 10 references the table and judges, for the maximum horizontal frequency 64, that the first display device 10 cannot output a suitable picture at the maximum horizontal frequency 64 "109 Hz" of the second display device 20 and selects the maximum horizontal frequency 64 "69 Hz" of the first display device 10 as the judgment output data. The EDID data processing portion 1 of the first display device 10 references the table and judges, for the maximum pixel clock frequency 65, that the first display device 10 cannot generate a suitable picture at the maximum pixel clock frequency 65 "230 Hz" of the second display device 20 and selects the maximum pixel clock frequency 65 "108 Hz" of the first display device 10 as the judgment output data.

Thus, the EDID data processing portion 1 of the first display device 10 generates optimum display specification information, i.e., the optimum judgment output data, for the first display device 10 and second display device 20 with respect to the minimum vertical frequency 61, the maximum vertical frequency 62, the minimum horizontal frequency 63, the maximum horizontal frequency 64, and the maximum pixel clock frequency 65. The EDID data processing portion 1 of the first display device 10 then stores the optimum display specification information thus created in a predetermined memory area within the EDID data processing portion 1. Then, the picture distribution device 60 reads the optimum display specification information from the predetermined memory area within the EDID data processing port ion 1 of the first display device 10. As a result, the picture distribution device 60 is able to reference the optimum display specification information and sends a common picture signal, which can be displayed in each of the display devices simultaneously, to the first display device 10.

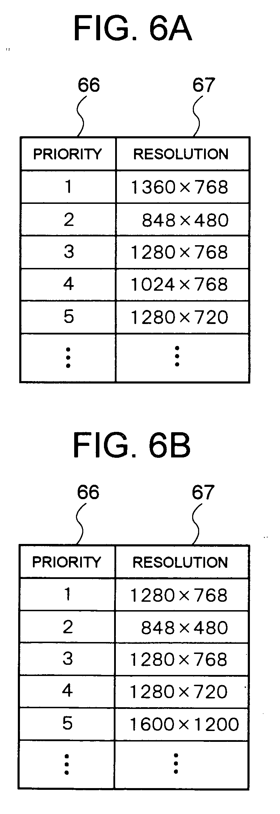

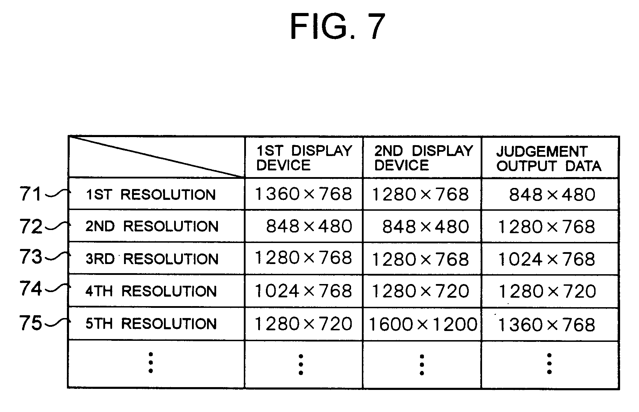

Another example will be described with reference to Fig. 6A, Fig. 6B and Fig. 7. This example deals with a case where there are two display devices 10 and 20 in the display system, and the first display device 10 generates optimum resolution-related display specification information for the first display device 10 and second display device 20. Fig. 6A is a resolution information table that is stored in the EDID storage EEPROM 2 of the first display device 10 and shows display specification information that associates the resolution 67 of the first display device 10 and the priority 66 thereof. Fig. 6B is a resolution information table that is stored in the EDID storage EEPROM 2 of the second display device 20 and shows display specification information that associates the resolution 67 of the second display device 20 and the priority 66 thereof. The resolution 67 denotes the resolution that can be displayed by the display device, and the priority 66 denotes the priorities given to the various resolutions in the display device when displaying images.

Referring to Fig. 6A, in the first display device 10, the resolution 67 having the first priority 66 is "1360×768" and the resolution 67 having the second priority 66 is "848×480". The resolution 67 having the third priority 66 is "1280×768", the resolution 67 having the fourth priority 66 is "1024×768", and the resolution 67 having the fifth priority 66 is "1280×720". Referring to Fig. 6B, in the second display device 20, the resolution 67 with the first priority 66 is "1024×768", and the resolution 67 with the second priority 66 is "848×480". The resolution 67 with the third priority 66 is "1280×768", the resolution 67 with the fourth priority 66 is "1280×720", and the resolution 67 with the fifth priority 66 is "1600×1200".

Fig. 7 is a table that is generated by the EDID data processing portion 1 of the first display device 10 and shows optimum display specification information. First, the EDID data processing portion 1 of the first display device 10 creates a table that associates resolution-related display specification information (Fig. 6A) that is stored in the EDID storage EEPROM 2 of the first display device 10, resolution-related display specification information (Fig. 6B) that is stored in a predetermined storage area of the EDID data processing portion 1 of the second display device 20 and judgment output data that is optimum display specification information.

The judgment output data is optimum data (optimum display specification information) for the first display device 10 and second display device 20 and includes a first resolution 71, a second resolution 72, a third resolution 73, a fourth resolution 74, and a fifth resolution 75, based on the priority 66. The EDID data processing portion 1 of the first display device 10 references the table and determines the priorities of the resolutions. The EDID data processing portion 1 of the first display device 10 judges the second resolution 72 "848×480" that is common to the first display device 10 and second display device 20 to be the highest priority resolution and makes the first resolution 71 of the judgment output data "848×480". The EDID data processing portion 1 of the first display device 10 also judges the third resolution 73 "1280×768" that is common to the first display device 10 and the second display device 20 to be the second priority resolution and makes the second resolution 72 of the judgment output data "1280×768".

In addition, the EDID data processing portion 1 of the first display device 10 judges the fourth resolution 74 "1024×768" of the first display device 10 to be the same as the first resolution 71 of the second display device 20 and makes the third resolution 73 of the judgment output data "1024×768". The EDID data processing portion 1 of the first display device 10 judges the fifth resolution 75 "1280×720" of the first display device 10 to be the same as the fourth resolution 74 of the second display device 20 and renders the fourth resolution 74 of the judgment output data "1280×720". Based on the fact that the first resolution 71 "1360×768" of the first display device 10 is sufficiently close to the fifth resolution 75 of the second display device 20, the fifth resolution 75 of the judgment output data is made "1360×768".

Thus, the EDID data processing portion 1 of the first display device 10 generates the optimum display specification information, i.e., optimum judgment output data, for the first display device 10 and the second display device 20 with respect to the first resolution 71, the second resolution 72, the third resolution 73, the fourth resolution 74, and the fifth resolution 75. The EDID data processing portion 1 of the first display device 10 stores the optimum display specification information thus created in a predetermined memory area in the EDID data processing portion 1. Accordingly, the picture distribution device 60 reads the optimum display specification information from the predetermined memory area in the EDID data processing portion 1 of the first display device 10. As a result, the picture distribution device 60 is able to reference the optimum display specification information and supply a common picture signal, that is displayed simultaneously in each of the display devices 10 and 20, to the first display device 10.

As described above, in the display system of the present invention, display devices can be serially connected in order from the first display device to the Nth (N is an integer of 2 or more) display device, so that the connected display devices can be increased by any amount. Further, for the reasons mentioned above, the picture distribution device 60 is able to reference the optimum display specification information and supply to the first display device 10 a common picture signal that allows all the connected display devices 10, 20, 30, and 40 to display a picture simultaneously.

Therefore, the display system of the present invention affords great versatility.

It should be noted that the present invention is not limited to the above described embodiments and examples. In the display system 8 shown in Fig. 2, the picture signal output terminal 6 of the Jth display device is connected to the picture signal input terminal 5 of the (J+1)th display device. The data processing portion 1 of the Jth display device reads (J+1)th optimum display specification information from the storage portion of the (J+1)th display device via the I/O terminals thereof. In addition, the picture signal processing portion 3 of the Jth display device receives a Jth picture signal via the picture signal input terminal 5 of the Jth display device, displays the Jthpicture signal on the display 7 of the Jth display device, and transmits the Jth picture signal to the (J+1)th display device via the input/output terminals as the (J+1)th picture signal. That is, the picture signal processing portion 3 transmits and receives optimum display specification information and a picture signal via the input/output terminals. However, the picture signal need not necessarily be transmitted and received via these input/output terminals. As shown in Fig. 1, the picture signal can also be transmitted by the picture distribution device 60 to the respective picture signal input terminals 5 of the display devices (the Jth display device and (J+1) th display device, for example) via a video signal divider circuit. If there is a large number of display devices connected to the picture distribution device 60, and the picture signal is serially transmitted from the first display device to the final display device, the delay of the picture signal between the first display device and final display device increases. In this case, it is may be desirable that the optimum display specification information is transmitted in order from the final display device to the first display device, whereas the picture signal is transmitted in parallel from the picture distribution device 60 to the picture signal input terminals 5 of the respective display devices via the video signal divider circuit once the common picture signal to be displayed in each of the connected display devices is prepared.

## Claims

1. A display system, comprising:
N display devices that are connected in order from a first display device to an Nth (N is an integer greater than one) display device, each said display device having a storage portion for holding its own display specification information, a memory portion, and a data processing portion,
wherein the data processing portion of the Nth display device reads Nth display device's display specification information from the storage portion of the Nth display device and stores the Nth display device's display specification information in the memory portion of the Nth display device as Nth optimum display specification information; and
the data processing portion of a Jth display device (1 ≤ J ≤ N-1) reads Jth display device's display specification information from the storage portion of the Jth display device, reads (J+1)th optimum display specification information from the memory portion of a (J+1)th display device, generates Jth optimum display specification information that is common to the Jth display device's display specification information and the (J+1) th optimum display specification information, and stores the Jth optimum display specification information in the memory portion of the Jth display device.

2. A display system according to claim 1 further comprising a picture distribution device that is connected to the first display device,
wherein the picture distribution device references first optimum display specification information that is stored in the memory portion of the first display device and transmits a first picture signal, which is a common picture signal to be displayed by each of the N display devices, to the first display device.

3. A display system according to either claim 1 or claim 2, wherein the display specification information of each said display device is EDID (Extended Display Identification Data) that is applied to the display device concerned.

4. A display system according to claim 3, wherein the EDID includes at least one of a resolution, a horizontal frequency, a vertical frequency, andapixel clock frequency that are applied to the display device concerned.

5. A display system according to any of claims 1 to 4, wherein each said display device further includes a picture signal processing portion and a display,
wherein the picture signal processing portion of the Jth display device receives a Jth picture signal, displays the Jth picture signal on the display of the Jth display device, and transmits the Jth picture signal to the (J+1) th display device as a (J+1)th picture signal; and
the picture signal processing portion of the Nth display device receives an Nthpicture signal and displays the Nthpicture signal on the display of the Nth display device.

6. A display device in a display system, the display system having N display devices connected in order from a first display device to an Nth (N is an integer greater than one) display device, the display device comprising:
a storage portion for holding its own display specification information;
a memory portion; and
a data processing portion,
wherein when the display device is the Nth display device, the data processing portion reads Nth display device's display specification information from the storage portion of the Nth display device and stores the Nth display device's display specification information in the memory portion as Nth optimum display specification information; and
when the display device is a Jth display device (1 ≤ J ≤ N-1), the data processing portion reads Jth display device's display specification information from the storage portion of the Jth display device, reads (J+1)th optimum display specification information from a memory portion of a (J+1)th display device, generates Jth optimum display specification information that is common to the Jth display device's display specification information and the (J+1)th optimum display specification information, and stores the Jth optimum display specification information in the memory portion of the Jth display device.

7. A display device according to claim 6, wherein when the display device is the first display device, the data processing portion of the first display device supplies a storage completion notification to a picture distribution device so that the picture distribution device references first optimum display specification information that is stored in the memory portion of the first display device, and transmits a first picture signal which is a common picture signal to be displayed by each of the N display devices.

8. A display device according to either claim 6 or claim 7, wherein the display specification information of each said display device is EDID (Extended Display Identification Data) that is applied to the display device concerned.

9. A display device according to claim 8, wherein the EDID includes at least one of a resolution, a horizontal frequency, a vertical frequency, and a pixel clock frequency that are applied to the display device concerned.

10. A display device according to any of claims 6, 7, 8 or 9, further comprising:
a picture signal processing portion; and
a display,
wherein when the display device is the Jth display device, the picture signal processing portion of the Jth display device receives a Jth picture signal and displays the Jth picture signal on the display of the Jth display device, and transmits the Jth picture signal to the (J+1)th display device as a (J+1) th picture signal; and,
when the display device is the Nth display device, the picture signal processing portion of the Nth display device receives anNthpicture signal and displays the Nthpicture signal on the display of the Nth display device.

11. A display support program that supports display of a picture signal and is applied to each of N display devices connected in order from a first display device to an Nth (N is an integer greater than one) display device, each said display device including a computer that has a storage portion for holding its own display specification information, and a memory portion, the display support program causing a computer to execute the steps of:
when the display device is the Nth display device, reading Nth display device's display specification information from the storage portion of the Nth display device and storing the Nth display device's display specification information in the memory port ion of the Nth display device as Nth optimum display specification information; and
when the display device is a Jth display device (1 ≤ J ≤ N-1), reading Jth display device's display specification information from the storage portion of the Jth display device;
reading (J+1)th optimum display specification information from the memory portion of the (J+1)th display device;
generating Jth optimum display specification information that is common to the Jth display device's display specification information and the (J+1)th optimum display specification information; and
storing the Jth optimum display specification information in the memory portion of the Jth display device.

12. A display support program according to claim 11, wherein when the display device is the first display device, the display support program allows the computer to further execute the step of supplying a storage completion notification to a picture distribution device so that the picture distribution device references first optimum display specification information that is stored in the memory portion of the first display device and issues a first picture signal, which is a common picture signal to be displayed by each of the N display devices.

13. A display support program according to either claim 11 or claim 12, wherein the display specification information of each said display device is EDID (Extended Display Identification Data) of the display device concerned.

14. A display support program according to claim 13, wherein the EDID includes at least one of a resolution, a horizontal frequency, a vertical frequency, and a pixel clock frequency of the display device concerned.

15. A display support program according to any of claims 11, 12, 13 or 14, wherein the display support program allows the computer to further execute the step of, when the display device is the Jth display device, receiving and displaying a Jth picture signal and transmitting a Jth picture signal to a (J+1)th display device as a (J+1)th picture signal, and when the display device is the Nth display device, the step of receiving and displaying an Nth picture signal.

16. A display support method that supports displaying of a picture signal and is applied to each of N display devices connected in order from a first display device to an Nth (N is an integer greater than one) display device, each said display device including a storage portion for holding its own display specification information, and a memory portion, the display support method comprising the steps of:
when the display device is the Nth display device, reading Nth display device's display specification information from the storage portion of the Nth display device and storing the Nth display device's display specification information in thememoryportionof the Nth display device as Nth optimum display specification information; and
when the display device is a Jth display device (1 ≤ J ≤ N-1), reading Jth display device's display specification information from the storage portion of the Jth display device;
reading (J+1)th optimum display specification information from the memory portion of a (J+1) th display device;
generating Jth optimum display specification information that is common to the Jth display device's display specification information and the (J+1)th optimum display specification information; and
storing the Jth optimum display specification information in the memory portion of the Jth display device.

17. A display support method according to claim 16 further comprising the step of:
when the display device is the first display device, supplying a storage completion notification to a picture distribution device so that the picture distribution device references first optimum display specification information that is stored in the memory portion of the first display device and issues a first picture signal, which is a common picture signal to be displayed by each of the N display devices.

18. A display support method according to either claim 16 or claim 17, wherein the display specification information of each said display device is EDID (ExtendedDisplayIdentification Data) of the display device concerned.

19. A display support method according to claim 18, wherein the EDID includes at least one of a resolution, a horizontal frequency, a vertical frequency, and a pixel clock frequency of the display device concerned.

20. A display support method according to any of claims 16 to 19, further comprising the step of, when the display device is the Jth display device, receiving and displaying a Jth picture signal and transmitting the Jth picture signal to the (J+1)th display device as a (J+1) th picture signal, and when the display device is the Nth display device, the step of receiving and displaying an Nth picture signal.
